# EUROPEAN PATENT APPLICATION

(11) **EP 4 730 863 A1**
(43) Date of publication of application: **22.04.2026**
(21) Application number: 24838775.5
(22) Date of filing: 08.07.2024
(51) Int. Cl.: H04W 36/00

(54) **SECONDARY CELL ACTIVATION METHOD AND COMMUNICATION APPARATUS**

(30) Priority: 12.07.2023 CN 202310850686
(71) Applicant: Huawei Technologies Co., Ltd., Shenzhen, Guangdong 518129 (CN)
(72) Inventor: HUANG, Xiuxuan, Shenzhen, Guangdong 518129 (CN); LI, Xinxian, Shenzhen, Guangdong 518129 (CN); ZHAI, Bangzhao, Shenzhen, Guangdong 518129 (CN); DING, Mengying, Shenzhen, Guangdong 518129 (CN); PENG, Jinlin, Shenzhen, Guangdong 518129 (CN)
(74) Representative: Thun, Clemens
(86) International application number: PCT/CN2024/104242
(87) International publication number: WO 2025/011522

(57) **Abstract**

This application provides a secondary cell activation method and a communication apparatus. The method includes: A terminal device receives first information from a network device, where the first information indicates a start location of a reference signal burst of a secondary cell and an interval between two adjacent reference signal bursts; and further, the terminal device receives the reference signal burst from the secondary cell based on the start location and the interval, and performs automatic gain control settling, cell search, or layer 1 reference signal received power measurement based on the reference signal burst. According to the method, a periodicity of the reference signal burst set may be determined based on the interval between the reference signal bursts that is indicated by the first information. This helps improve flexibility of the periodicity of the reference signal burst set, and helps shorten a delay of activating the secondary cell by the terminal device.

## Description

This application claims priority to Chinese Patent Application No. 202310850686.2, filed with the China National Intellectual Property Administration on July 12, 2023 and entitled "SECONDARY CELL ACTIVATION METHOD AND COMMUNICATION APPARATUS", which is incorporated herein by reference in its entirety.

### TECHNICAL FIELD

This application relates to the communication field, and in particular, to a secondary cell activation method and a communication apparatus.

### BACKGROUND

After a secondary cell (secondary cell, SCell) is configured, a terminal device needs to first activate the SCell based on an indication of a network device before performing signal transmission through a resource of the secondary cell. A process of activating the SCell includes a process of determining an optimal transmit/receive beam pair for communication between the terminal device and the SCell, and the process is performed based on a synchronization signal and physical broadcast channel block (synchronization signal and physical broadcast channel block, SSB). In the process, the terminal device needs to perform automatic gain control settling (automatic gain control settling, AGC settling) twice, cell search (cell search) once, and layer 1 reference signal received power measurement (layer 1 reference signal received power measurement, L1-RSRP measurement) once in each receive beam direction.

Generally, in the activation process, an SSB periodicity is 20 ms, and in each SSB periodicity, the terminal device may perform AGC settling once, cell search once, or L1-RSRP measurement once on one receive beam. In other words, when the terminal device has eight receive beams, 32 (that is, four times a quantity of receive beams) SSB periodicities, that is, 640 ms, are needed for the terminal device to perform AGC settling twice, cell search once, and L1-RSRP measurement once in the activation process. It can be learned that a long delay is generated in the process of activating the SCell.

### SUMMARY

Embodiments of this application provide a secondary cell activation method and a communication apparatus, to improve flexibility of a periodicity of a reference signal burst set, and reduce a delay of activating a secondary cell by a terminal device.

According to a first aspect, this application provides a secondary cell activation method. An example in which a terminal device performs the method is used. The method includes: The terminal device receives first information from a network device, where the first information indicates a start location of a reference signal burst of a secondary cell and an interval between two adjacent reference signal bursts; and further, the terminal device receives the reference signal burst from the secondary cell based on the start location and the interval, and performs automatic gain control settling, cell search, or layer 1 reference signal received power measurement based on the reference signal burst.

In the method described in the first aspect, the first information indicates the interval between the two adjacent reference signal bursts to affect a periodicity of a reference signal burst set, thereby improving flexibility of the periodicity of the reference signal burst set. In comparison with a manner of performing automatic gain control settling, cell search, or layer 1 reference signal received power measurement based on a fixed periodicity of receiving an SSB, a manner of performing automatic gain control settling, cell search, or layer 1 reference signal received power measurement based on the flexible periodicity of receiving the reference signal burst helps reduce a delay of activating the secondary cell by the terminal device.

In a possible implementation, the reference signal burst includes a signal including a first signal and a first channel, the first signal is used for synchronization, the first channel is used for carrying frame indication information and index value information, the frame indication information indicates a location of the reference signal burst in a corresponding frame, and the index value information indicates a location of the reference signal burst in a reference signal burst set to which the reference signal burst belongs.

In a possible implementation, the first signal includes a primary synchronization signal PSS and/or a secondary synchronization signal SSS, and the first channel is a physical broadcast channel PBCH.

In a possible implementation, the first signal is a signal generated based on an m-sequence, and the first channel is a physical downlink control channel PDCCH.

In a possible implementation, the terminal device receives second information from the network device, where the second information indicates a quantity of reference signal bursts included in the reference signal burst set.

In a possible implementation, the terminal device receives third information from the network device, where the third information indicates a quantity of reference signal burst sets.

In a possible implementation, the quantity of reference signal bursts in the reference signal burst set is determined based on a quantity of receive beams of the terminal device.

In a possible implementation, the terminal device receives fourth information from the network device, where the fourth information indicates a sending manner of reference signal bursts in a same reference signal burst set, and the sending manner is repeated sending or non-repeated sending.

According to a second aspect, this application provides a secondary cell activation method. An example in which a network device performs the method is used. The method includes: The network device sends first information to a terminal device, where the first information indicates a start location of a reference signal burst of a secondary cell and an interval between two adjacent reference signal bursts; and further, the network device sends the reference signal burst to the terminal device based on the start location and the interval via the secondary cell.

In the method described in the second aspect, the first information indicates the interval between the two adjacent reference signal bursts to affect a periodicity of a reference signal burst set, thereby improving flexibility of the periodicity of the reference signal burst set. In comparison with a manner of performing automatic gain control settling, cell search, or layer 1 reference signal received power measurement based on a fixed periodicity of receiving an SSB, a manner of performing automatic gain control settling, cell search, or layer 1 reference signal received power measurement based on the flexible periodicity of receiving the reference signal burst helps reduce a delay of activating the secondary cell.

In a possible implementation, the reference signal burst includes a signal including a first signal and a first channel, the first signal is used for synchronization, the first channel is used for carrying frame indication information and index value information, the frame indication information indicates a location of the reference signal burst in a corresponding frame, and the index value information indicates a location of the reference signal burst in a reference signal burst set to which the reference signal burst belongs.

In a possible implementation, the first signal includes a primary synchronization signal PSS and/or a secondary synchronization signal SSS, and the first channel is a physical broadcast channel PBCH.

In a possible implementation, the first signal is a signal generated based on an m-sequence, and the first channel is a physical downlink control channel PDCCH.

In a possible implementation, the network device sends second information to the terminal device, where the second information indicates a quantity of reference signal bursts included in the reference signal burst set.

In a possible implementation, the terminal device receives third information from the network device, where the third information indicates a quantity of reference signal burst sets.

In a possible implementation, the quantity of reference signal bursts in the reference signal burst set is determined based on a quantity of receive beams of the terminal device.

In a possible implementation, the network device sends fourth information to the terminal device, where the fourth information indicates a sending manner of reference signal bursts in a same reference signal burst set, and the sending manner is repeated sending or non-repeated sending.

According to a third aspect, this application provides a communication apparatus. The communication apparatus may be a terminal device, an apparatus in a terminal device, or an apparatus that can be used in combination with a terminal device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects, refer to the method and the beneficial effects in the first aspect.

According to a fourth aspect, this application provides a communication apparatus. The communication apparatus may be a network device, an apparatus in a network device, or an apparatus that can be used in combination with a network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects, refer to the method and the beneficial effects in the second aspect.

According to a fifth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to the first aspect through a logic circuit or by executing code instructions, or the processor is configured to implement the method according to the second aspect through a logic circuit or by executing code instructions.

According to a sixth aspect, this application provides a computer-readable storage medium. The storage medium stores a computer program or instructions, and when the computer program or the instructions are executed by a communication apparatus, the method according to the first aspect or the method according to the second aspect is implemented.

According to a seventh aspect, this application provides a computer program product including instructions. When a communication apparatus reads and executes the instructions, the communication apparatus performs the method according to the first aspect, or the communication apparatus performs the method according to the second aspect.

According to an eighth aspect, this application provides a communication system, including a communication apparatus configured to perform the method according to the first aspect and a communication apparatus configured to perform the method performed by the network device described in the second aspect.

### BRIEF DESCRIPTION OF DRAWINGS

FIG. 1 is a diagram of a communication system according to an embodiment of this application;
FIG. 2 is a diagram of carrier aggregation according to an embodiment of this application;
FIG. 3 is a diagram of a beam management process according to an embodiment of this application;
FIG. 4 is a diagram of a structure of a reference signal burst according to an embodiment of this application;
FIG. 5 is a diagram of another structure of a reference signal burst according to an embodiment of this application;
FIG. 6 is a schematic flowchart of a secondary cell activation method according to an embodiment of this application;
FIG. 7 is a diagram of a reference signal burst pattern according to an embodiment of this application;
FIG. 8 is a diagram of another reference signal burst pattern according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

In the specification, claims, and accompanying drawings of this application, terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It should be understood that embodiments described in this specification may be combined with another embodiment.

To facilitate specific understanding of embodiments of this application, the following first describes a system architecture in embodiments of this application.

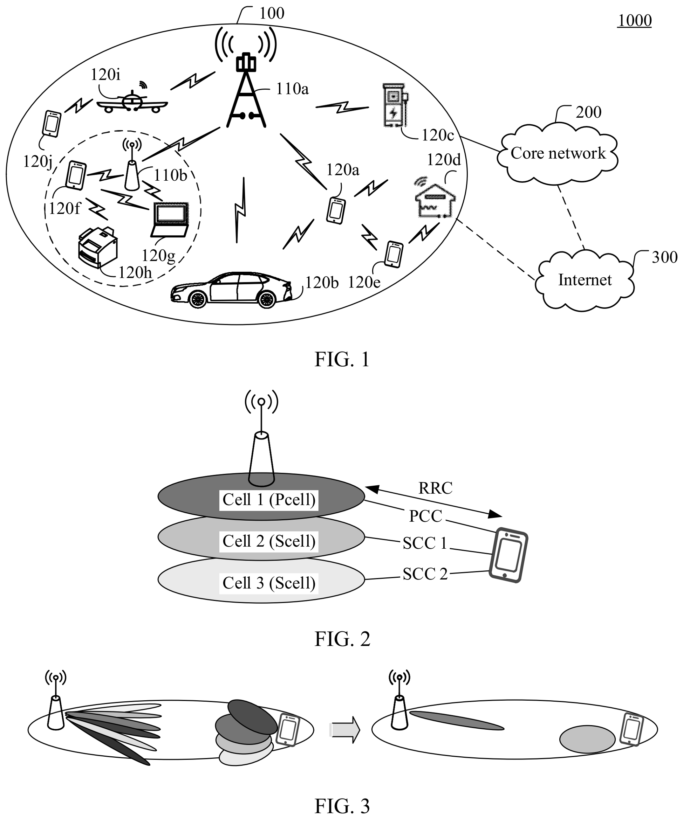

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may also include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner and RAN nodes may be connected to each other in a wired or wireless manner. It should be noted that the RAN node 110 may also be referred to as a network device 110 in the following.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may also be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses an example in which the base station is used as a RAN node for description.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, self-driving, remote medical, a smart grid, smart furniture, a smart office, smart wearable, smart transportation, and a smart city. The terminal may be a mobile phone, a tablet, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor scenario and a handheld or vehicle-mounted scenario, may be deployed on water, or may be deployed on an airplane, a balloon, or an artificial satellite. Application scenarios of the base station and the terminal are not limited in embodiments of this application.

Roles of the base station and the terminal may be relative. For example, the helicopter or the uncrewed aerial vehicle 120i in FIG. 1 may be configured as a mobile base station, and for the terminal 120j accessing the radio access network 100 through 120i, the terminal 120i is a base station. However, for the base station 110a, 120i is a terminal. That is, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between the base station and the base station, or between the terminal and the terminal may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from an adjacent cell.

In embodiments of this application, a time domain symbol may be an orthogonal frequency division multiplexing (orthogonal frequency division multiplexing, OFDM) symbol, or may be a discrete Fourier transform-spread-OFDM (discrete Fourier transform-spread-OFDM, DFT-s-OFDM) symbol. Unless otherwise specified, all symbols in embodiments of this application are time domain symbols.

For ease of understanding related content in embodiments of this application, the following further explains and describes some terms in embodiments of this application. This part is merely for ease of understanding, and cannot be considered as disclosure or specific limitation of the technical solutions of this application.

### 1. Beam

The beam may be represented by a spatial filter (spatial filter) or spatial parameters (spatial parameters) in an NR protocol. A beam used for sending a signal may be referred to as a transmit beam (transmission beam, Tx beam), and may be referred to as a spatial transmit filter or a spatial transmit parameter. A beam used for receiving a signal may be referred to as a receive beam (reception beam, Rx beam), and may be referred to as a spatial receive filter or a spatial receive parameter.

The transmit beam may refer to signal strength distribution formed in different directions in space after a signal is transmitted through an antenna, and the receive beam may refer to signal strength distribution in different directions in space of a radio signal received from an antenna.

It should be understood that the foregoing listed representation of the beam in the NR protocol is merely an example, and shall not constitute any limitation on this application. This application does not exclude a possibility that other terms are defined in another protocol to indicate same or similar meanings.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like. Different beams may be considered as being corresponding to different resources. Same information or different information may be sent through different beams.

Optionally, a plurality of beams having a same communication feature or similar communication features are considered as one beam. One beam may include one or more antenna ports, configured to transmit data, control signaling, a sounding signal, and the like. The one or more antenna ports forming the beam may also be considered as one antenna port set.

### 2. Cell (cell)

The cell is described by a higher layer from a perspective of resource management or mobility management or a service unit. Coverage of each network device may be divided into one or more cells, and the cell may be considered as including a specific frequency domain resource.

It should be noted that the cell may be an area within coverage of a wireless network of the network device. In embodiments of this application, different cells may correspond to different network devices. For example, a network device in a cell #1 and a network device in a cell #2 may be different network devices, for example, base stations. In other words, the cell #1 and the cell #2 may be managed by different base stations. In this case, it may be referred that the cell #1 and the cell #2 are not co-sited, or are not served by a same base station. The network device in the cell #1 and the network device in the cell #2 may alternatively be different radio frequency processing units of a same base station, for example, RRUs. That is, the cell #1 and the cell #2 may be managed by the same base station, and have a same baseband processing unit and intermediate frequency processing unit, but have different radio frequency processing units. This is not particularly limited in this application.

According to a frequency band range in which a cell is located (or understood as a frequency band range to which a cell correspond), a cell in a range of 450 MHz to 6000 MHz may be referred to as a cell in a frequency range (frequency range, FR) 1 or a low-frequency cell, and a cell in a range of 24250 MHz to 52600 MHz is referred to as a cell in FR2 or a high-frequency cell. It should be noted that, in this application, meanings of the cell and a carrier are not distinguished. To be specific, the cell and the carrier may be considered as representing a same object, or this is understood as that the cell and the carrier are in one-to-one correspondence. In other words, the frequency band range in which the cell is located may be understood as a frequency band range in which a frequency of a carrier corresponding to the cell is located, or may be referred to as an operating frequency band of the cell, a frequency band of the cell, or the like.

### 3. Carrier aggregation (carrier aggregation, CA)

Refer to FIG. 2. A CA technology is a technology in which two or more component carriers (component carriers, CCs) are aggregated together to support a larger transmission bandwidth. In other words, in the CA technology, multi-frequency resource integration can be implemented, and spectrum resources of a same frequency band or different frequency bands can be aggregated for use by a terminal device, thereby improving resource utilization of an entire network.

When the CA is configured for the terminal device, the terminal device may have a plurality of serving cells (serving cells), and the plurality of serving cells include one primary cell (primary cell, PCell) and at least one SCell. The PCell is a cell in which the terminal device and a network device perform initial connection establishment (connection establishment), a cell in which the terminal device performs radio resource control (radio resource control, RRC) connection reestablishment, or a PCell that performs handover in a handover (handover) process. The PCell is responsible for radio resource control RRC communication with the terminal device, and a CC corresponding to the PCell is referred to as a primary component carrier (primary component carrier, PCC). The SCell is added, modified, or released by using an RRC connection reconfiguration message after an initial security activation procedure (initial security activation procedure). The SCell is used for providing an additional radio resource, and there is no RRC communication between the SCell and the terminal device.

### 4. SCell activation

Two SCell states: an activated state and a de-activated state are defined in an NR protocol. When an SCell is in the activated state, and a physical downlink control channel (physical downlink control channel, PDCCH) is configured for the SCell, a terminal device monitors the PDCCH of the SCell, and transmits a signal based on a network configuration and uplink and downlink scheduling information. When the SCell is in the de-activated state, the terminal device does not monitor or transmit any uplink or downlink signal in the SCell.

Generally, a network device provides a related configuration of the SCell for the terminal device by using RRC signaling, and indicates the terminal device to add the SCell. In this case, a default state of the SCell is a de-activated state. In other words, the SCell is not available after being configured, and needs to be activated. After the SCell is added to the terminal device, the following three processes are mainly included:

### 4.1 Process of receiving an activation command

Specifically, the network device sends the activation command to the terminal device by activating a media access control element (media access control control element, MAC CE); and the terminal device sends HARQ feedback information to the network device, where the HARQ feedback information indicates whether the activation command is successfully received.

### 4.2 Process of activating an SCell in FR2

Specifically, when the network device receives the HARQ feedback information from the terminal device, and the HARQ feedback information indicates that the activation command is successfully received, the terminal device and the network device perform beam alignment. As shown in FIG. 3, the process of activating the SCell in FR2 may be understood as a process of performing coarse beam alignment based on an SSB, and determining a transmit beam of the network device and a receive beam of the terminal device. Specifically, the network device sends the SSB to the terminal device in a plurality of transmit beam directions, and the terminal device receives the SSB from the network device in a plurality of receive beam directions. The terminal device performs automatic gain control settling (automatic gain control settling, AGC settling), cell search (cell search), and layer 1 reference signal received power measurement (layer 1 reference signal received power measurement, L1-RSRP measurement) based on the received SSB. The AGC settling is used for determining transmit power of the transmit beam. The cell search is used for detecting the SSB to obtain coarse synchronization information, to determine a frame boundary. The L1-RSRP measurement is used for determining a transmit beam range and a receive beam range. It should be noted that the terminal device usually needs to perform AGC settling twice, cell search once, and L1-RSRP measurement once in each receive beam direction.

### 4.3 Channel state information reference signal (channel state information reference signal, CSI-RS) measurement process

Specifically, the network device sends a CSI-RS to the terminal device by using the SCell; the terminal device receives the CSI-RS and measures the CSI-RS to obtain a CSI report; and the terminal device sends the CSI report to the network device. It should be understood that when the network device receives a valid CSI report of the SCell from the terminal device, it is considered that the process of activating the SCell ends.

It can be learned that a delay generated in the process of activating the SCell in FR2 may include delays in the following three parts: a delay generated in the process of receiving the activation command, which is referred to as *T_{HARQ}*; a delay generated in the activation process, which is referred to as *T_{activation_time}*; and a delay generated in the CSI-RS measurement process, which is referred to as *T_{CSI_Reporting}*.

To shorten the delay of activating the SCell, this application provides a reference signal burst (burst) and a secondary cell activation method based on the reference signal burst. The following first describes the reference signal burst.

The reference signal burst mentioned in this application includes a signal including a signal used for synchronization (a first signal mentioned in this application) and a channel used for carrying frame indication information and index value information (that is, a first channel mentioned in this application). A specific name of the reference signal burst is not limited in this application. The frame indication information indicates a location of the reference signal burst in a corresponding frame, or indicates a location of a reference signal burst set (set) to which the reference signal burst belongs in a corresponding frame, and the index value information indicates a location of the reference signal burst in the reference signal burst set to which the reference signal burst belongs. It may be understood as that, after parsing the reference signal burst, the terminal device performs symbol synchronization based on the first signal, and obtains the frame indication information and the index value information from the first channel to perform frame synchronization.

In a possible implementation, the first signal includes a primary synchronization signal (primary synchronization signal, PSS) and/or a secondary synchronization signal (secondary synchronization signal, SSS); or the first signal is a signal generated based on an m-sequence. For example, the first signal is a CSI-RS. The first channel includes either of a physical broadcast channel (physical broadcast channel, PBCH) or a PDCCH.

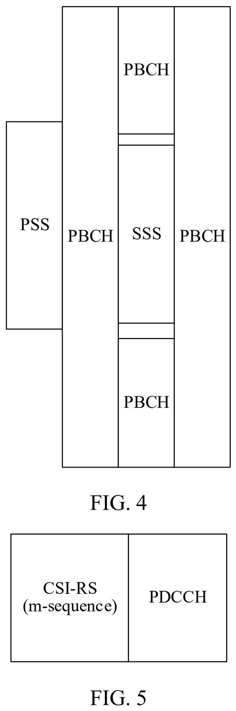

In other words, the reference signal burst may include a signal including the PSS and/or the SSS and the PBCH, include a signal including the PSS and/or the SSS and the PDCCH, include a signal including the PBCH and the signal generated based on the m-sequence, or include a signal including the PDCCH and the signal generated based on the m-sequence. For example, a physical signal structure of the reference signal burst may be shown in FIG. 4 or FIG. 5. In FIG. 4, a first signal in the reference signal burst includes a PSS and an SSS, and the first channel is a PBCH. In FIG. 5, a first signal in the reference signal burst includes a signal (for example, a CSI-RS in FIG. 5) generated based on an m-sequence, and the first channel is a PDCCH. It should be noted that, the signal generated based on the m-sequence mentioned in this application includes a signal generated through transformation of the signal generated based on the m-sequence.

In a possible implementation, a quantity of bits corresponding to the frame indication information, which is understood as a quantity of bits indicating the frame indication information, is determined based on a quantity of reference signal burst sets included in a frame; and a quantity of bits corresponding to the index value information, which is understood as a quantity of bits indicating the index value information, is determined based on a quantity of reference signal bursts included in a reference signal burst set. For example, in an NR standard, when duration of a transmitted frame is 10 ms, and a periodicity of one reference signal burst set is 2.5 ms, one frame includes four reference signal burst sets. That is, the duration of one frame includes periodicities of the four reference signal burst sets. In this case, two bits are needed for the frame indication information to indicate a specific quarter-frame, of the frame, to which the reference signal burst belongs, or two bits are needed to indicate a specific quarter-frame, of the frame, to which the reference signal burst set belongs. When one reference signal burst set includes 32 reference signal bursts, five bits are needed for the index value information to indicate a specific reference signal burst in the reference signal burst set.

In a possible implementation, there is a correspondence between index value information of a reference signal burst and a transmit beam direction. Reference signal bursts with different index value information in a same reference signal burst set may correspond to a same transmit beam direction. For example, a 1^{st} reference signal burst set includes 32 reference signal bursts: a reference signal burst #1 to a reference signal burst #32 sent through a transmit beam TX1. Reference signal bursts with different index value information in a same reference signal burst set may alternatively correspond to different transmit beam directions. For example, a 1^{st} reference signal burst set includes eight reference signal bursts: a reference signal burst #1 to a reference signal burst #8 sent through transmit beams TX1 to TX8. Different reference signal bursts in the 1^{st} reference signal burst set correspond to different transmit beam directions. When reference signal bursts with different index value information correspond to different transmit beam directions, reference signal bursts indicated by same index value information in different reference signal burst sets correspond to a same transmit beam direction. For example, the 1^{st} reference signal burst set includes the eight reference signal bursts: the reference signal burst #1 to the reference signal burst #8 sent through the transmit beams TX1 to TX8, and a 2^{nd} reference signal burst set includes eight reference signal bursts: a reference signal burst #1 to a reference signal burst #8 sent through the transmit beams TX1 to TX8, where both the reference signal burst #1 in the 1^{st} reference signal burst set and the reference signal burst #1 in the 2^{nd} reference signal burst set correspond to the transmit beam TX1.

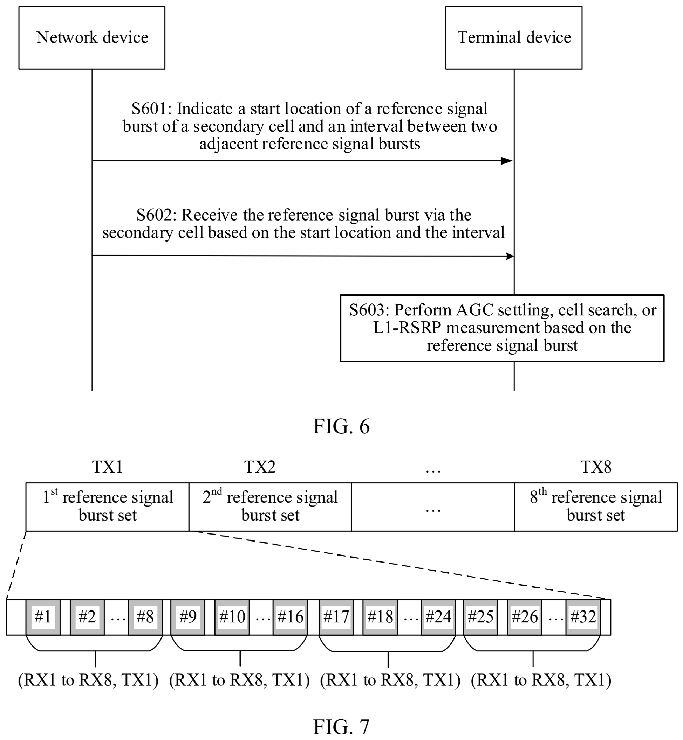

Based on the foregoing reference signal burst, the following describes in detail, with reference to the accompanying drawings, the secondary cell activation method and a communication apparatus that are provided in embodiments of this application. FIG. 6 is a schematic flowchart of a secondary cell activation method according to an embodiment of this application. As shown in FIG. 6, the secondary cell activation method includes the following step S601 to step S603. An example in which the method shown in FIG. 6 is performed by a terminal device and a network device is used for description. It may be understood that the method shown in FIG. 6 may alternatively be performed by a module (for example, a chip) in the terminal device and a module (for example, a chip, a CU, or a DU) in the network device.

S601: The terminal device receives first information from the network device, where the first information indicates a start location of a reference signal burst of a secondary cell and an interval between two adjacent reference signal bursts.

The network device sends RRC signaling to the terminal device by using an RRC connection between the PCell and the terminal device, where the RRC signaling carries the first information indicating the start location of the reference signal burst of the secondary cell and the interval between the two adjacent reference signal bursts. It may be understood that one reference signal burst set includes a plurality of reference signal bursts, and a periodicity of the reference signal burst set may be determined based on a quantity of reference signal bursts in the reference signal burst set and the interval between the two adjacent reference signal bursts. The interval may be understood as a time unit between an end moment of the former reference signal burst and a start moment of the latter reference signal burst in the two adjacent reference signal bursts. The time unit includes but is not limited to a slot, a time domain symbol (or referred to as a symbol), or the like.

For example, a subcarrier spacing of a to-be-activated SCell is 120 kHz, a length of one slot is 0.125 ms, one slot includes 14 symbols, a length of one symbol is 0.00893 ms (that is, 0.125 ms/14), and one reference signal burst occupies four symbols in time domain. In this case, the first information indicates that an interval between two adjacent reference signal bursts is three symbols. If one reference signal burst set includes 32 reference signal bursts, it may be determined that a periodicity of the reference signal burst set is a product of 32 and duration (that is, a product of 7 and 0.00893 ms, which is 0.06251 ms) of seven symbols (including the four symbols occupied by the reference signal burst in time domain and the three symbols between the two adjacent reference signal bursts), which is 2 ms. If it is known that one reference signal burst set includes eight reference signal bursts, it may be determined that a periodicity of the reference signal burst set is a product of 8 and duration (that is, 0.06251 ms) of seven symbols, which is 0.5 ms.

In a possible implementation method, the periodicity of the reference signal burst set may be determined based on one or more of the subcarrier spacing corresponding to the secondary cell, a quantity of transmit beams, or a quantity of receive beams. For example, when the interval (for example, a quantity of symbols) between the two adjacent reference signal bursts remains unchanged, an increased subcarrier spacing indicates shorter duration of the symbol and a shorter periodicity of the reference signal burst set. When the interval (for example, the quantity of symbols) between the two adjacent reference signal bursts remains unchanged and the subcarrier spacing is fixed, a larger quantity of transmit beams indicates a longer periodicity of the reference signal burst set. When the interval (for example, the quantity of symbols) between the two adjacent reference signal bursts remains unchanged and the subcarrier spacing is fixed, a larger quantity of receive beams indicates a longer periodicity of the reference signal burst set.

S602: The terminal device receives the reference signal burst from the secondary cell based on the start location and the interval.

The terminal device determines a pattern (pattern) of the reference signal burst based on the start location of the reference signal burst and the interval, and receives, based on the pattern, the reference signal burst from the network device via the secondary cell. It may be understood that the secondary cell that sends the reference signal burst is a to-be-activated secondary cell.

In a possible implementation method 1, the terminal device further receives third information from the network device, where the third information indicates a quantity of reference signal burst sets. It may be understood that the quantity of reference signal burst sets is determined based on the quantity of transmit beams. In this case, the terminal device may determine, based on the quantity of receive beams, a quantity of reference signal bursts included in each reference signal burst set in the pattern.

For example, the quantity of transmit beams is 8, and the third information indicates that the quantity of reference signal burst sets is 8. In a secondary cell activation process, the terminal device performs AGC settling twice (for example, a 1^{st} time of AGC settling and a 2^{nd} time of AGC settling in the following), cell search once, and L1-RSRP measurement once in each receive beam direction. In this case, the pattern determined by the terminal device is shown in FIG. 7. Reference signal bursts in a same reference signal burst set correspond to a same transmit beam direction, and a quantity of reference signal bursts in one reference signal burst set in the pattern is four times a quantity of receive beams. In FIG. 7, an example in which the quantity of receive beams is 8, in other words, the quantity of reference signal bursts in the reference signal burst set in the pattern is 32 is used for description. This should not be considered as a specific limitation on this application.

In a possible implementation of the implementation method 1, a transmit beam of the secondary cell includes a first transmit beam, and the first transmit beam corresponds to a first reference signal burst set in the pattern. The first reference signal burst set includes a first part of bursts, a second part of bursts, a third part of bursts, and a fourth part of bursts, and a quantity of reference signal bursts included in each part of bursts is determined based on the quantity of receive beams. Different reference signal bursts in the first part of bursts are used for performing a 1^{st} time of AGC settling in a first transmit beam direction in different receive beam directions, different reference signal bursts in the second part of bursts are used for performing a 2^{nd} time of AGC settling in the first transmit beam direction in different receive beam directions, different reference signal bursts in the third part of bursts are used for performing cell search in the first transmit beam direction in different receive beam directions, and different reference signal bursts in the fourth part of bursts are used for performing L1-RSRP measurement in the first transmit beam direction in different receive beam directions.

In a possible implementation method 2, the terminal device receives second information from the network device, where the second information indicates the quantity of reference signal bursts included in the reference signal burst set. The quantity of reference signal bursts included in the reference signal burst set may be understood as the quantity of transmit beams. In this case, the terminal device may determine, based on the quantity of receive beams, the quantity of reference signal burst sets in the pattern.

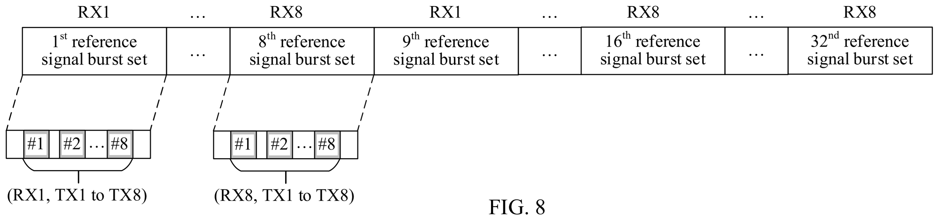

For example, the quantity of transmit beams is 8, and the second information indicates that the quantity of reference signal bursts included in the reference signal burst set is 8. In the secondary cell activation process, the terminal device performs AGC settling twice, cell search once, and L1-RSRP measurement once in each receive beam direction. In this case, the pattern determined by the terminal device is shown in FIG. 8. Reference signal bursts in a same reference signal burst set correspond to a same receive beam direction, and a quantity of reference signal burst sets in the pattern is four times a quantity of receive beams. In FIG. 8, an example in which the quantity of receive beams is 8, in other words, the quantity of reference signal burst sets in the pattern is 32 is used for description. This should not be considered as a specific limitation on this application.

In a possible implementation of the implementation method 2, the receive beam of the terminal device includes a first receive beam, and the first receive beam corresponds to a second reference signal burst set, a third reference signal burst set, a fourth reference signal burst set, and a fifth reference signal burst set in the pattern. Different reference signal bursts in the second reference signal burst set are used for performing a 1^{st} time of AGC settling in different transmit beam directions in a first receive beam direction, different reference signal bursts in the third reference signal burst set are used for performing a 2^{nd} time of AGC settling in different transmit beam directions in the first receive beam direction, different reference signal bursts in the fourth reference signal burst set are used for performing cell search in different transmit beam directions in the first receive beam direction, and different reference signal bursts in the fifth reference signal burst set are used for performing L1-RSRP measurement in different transmit beam directions in the first receive beam direction.

In a possible implementation method 3, the terminal device receives fourth information from the network device, where the fourth information indicates a sending manner of reference signal bursts in a same reference signal burst set, and the sending manner is repeated sending or non-repeated sending. The repeated sending may be understood as that reference signal bursts in the same reference signal burst set correspond to a same transmit beam direction (for example, as shown in FIG. 7), and the non-repeated sending may be understood as that different reference signal bursts in the same reference signal burst set correspond to different transmit beam directions (for example, as shown in FIG. 8).

In an implementation 1 of the possible implementation method 3, the fourth information indicates that the sending manner of the reference signal bursts in the same reference signal burst set is the repeated sending. In this case, reference signal bursts in one reference signal burst set correspond to a same transmit beam direction, and the terminal device traverses receive beams to receive the reference signal bursts in the reference signal burst set. When the terminal device receives four reference signal bursts in each receive beam direction, the terminal device completes receiving of the reference signal bursts in one reference signal burst set in the pattern.

In an implementation 2 of the possible implementation method 3, the fourth information indicates that the sending manner of the reference signal bursts in the same reference signal burst set is the non-repeated sending. In this case, reference signal bursts in one reference signal burst set correspond to a same receive beam direction, and the terminal device may determine, based on a correspondence between index value information and a transmit beam direction, that receiving of the reference signal bursts in the reference signal burst set is completed.

It may be understood that the foregoing implementation methods 1 to 3 may be separately executed in different implementation solutions, the implementation method 1 and the implementation 1 in the implementation method 3 may alternatively be jointly executed in a same implementation solution, and the implementation method 2 and the implementation 2 in the implementation method 3 may be jointly executed in a same implementation solution. For example, the implementation method 2 and the implementation 2 in the implementation method 3 are jointly executed in the same implementation solution. The terminal device receives the second information and the fourth information from the network device. The second information indicates that a quantity of reference signal bursts in a reference signal burst set is 8, and the fourth information indicates that a sending manner of reference signal bursts in a same reference signal burst set is non-repeated sending. In this case, the terminal device may determine a quantity of reference signal burst sets based on a quantity of receive beams of the terminal device, to obtain a pattern shown in FIG. 8.

It may be understood that, both the second information and the fourth information may be carried in RRC signaling (or understood as an RRC message), and the first information, the second information, and the fourth information may be carried in a same message, or may be carried in different messages. This is not specifically limited in this application.

S603: The terminal device performs AGC settling, cell search, or L1-RSRP measurement based on the reference signal burst.

The terminal device receives the reference signal burst based on the pattern, and performs an AGC settling process, a cell search process, or an L1-RSRP measurement process in the secondary cell activation process based on the received reference signal.

For example, refer to the pattern shown in FIG. 7. Receive beams of the terminal device include RX1 to RX8, and transmit beams of the secondary cell include TX1 to TX8. In this case, a 1^{st} reference signal burst set to an 8^{th} reference signal burst set respectively correspond to the TX1 to the TX8 in sequence. The 1^{st} reference signal burst set corresponding to the TX1 is used as an example. The 1^{st} reference signal burst set includes a first part of bursts (that is, reference signal bursts #1 to #8), a second part of bursts (that is, reference signal bursts #9 to #16), a third part of bursts (that is, reference signal bursts #17 to #24), and a fourth part of bursts (that is, reference signal bursts #25 to #32). Different reference signal bursts in the first part of bursts are used for performing a 1^{st} time of AGC settling in a TX1 direction in different receive beam directions, different reference signal bursts in the second part of bursts are used for performing a 2^{nd} time of AGC settling in the TX1 direction in different receive beam directions, different reference signal bursts in the third part of bursts are used for performing cell search in the TX1 direction in different receive beam directions, and different reference signal bursts in the fourth part of bursts are used for performing L1-RSRP measurement in the TX1 direction in different receive beam directions.

For example, refer to the pattern shown in FIG. 8. Receive beams of the terminal device include RX1 to RX8, and transmit beams of the secondary cell include TX1 to TX8. In this case, a 1^{st} reference signal burst set to a 32^{nd} reference signal burst set respectively correspond to the RX1 to the RX8 in sequence. The 1^{st} reference signal burst set, the 9^{th} reference signal burst set, the 17^{th} reference signal burst set, and the 25^{th} reference signal burst set corresponding to the RX1 are used as an example. Different reference signal bursts in the 1^{st} reference signal burst set are used for performing a 1^{st} time of AGC settling in different transmit beam directions in an RX1 direction, different reference signal bursts in the 9^{th} reference signal burst set are used for performing a 2^{nd} time of AGC settling in different transmit beam directions in the RX1 direction, different reference signal bursts in the 17^{th} reference signal burst set are used for performing cell search in different transmit beam directions in the RX1 direction, and different reference signal bursts in the 25^{th} reference signal burst set are used for performing L1-RSRP measurement in different transmit beam directions in the RX1 direction.

It should be noted that the cell search is used for performing frame synchronization. The following separately describes in detail a process of performing the cell search by the terminal device with reference to the physical structures of the reference signal bursts shown in FIG. 4 and FIG. 5.

With reference to the physical structure of the reference signal burst shown in FIG. 4, the terminal device parses the received reference signal burst, and performs symbol synchronization in a receiving direction based on the PSS and the SSS, to determine locations of a PSS symbol and an SSS symbol; the terminal device determines a location of the PBCH based on the determined locations of the PSS symbol and the SSS symbol and the physical structure of the reference signal burst; and further, the terminal device detects the PBCH to obtain frame indication information and index value information that are carried on the PBCH, and determines, based on the frame indication information and the index value information, a start location of a frame in which the current reference signal burst is located (or understood as a frame corresponding to the current reference signal burst). For ease of understanding, an example of determining, based on the frame indication information and the index value information, the start location of the frame in which the current reference signal burst is located is provided in this application. For example, the frame indication information carried on the first channel in the current reference signal burst indicates that a reference signal burst set to which the reference signal burst belongs is located in a 1^{st} quarter-frame of the current frame, and the index value information indicates that the reference signal burst is a 3^{rd} reference signal burst in the reference signal burst set to which the reference signal burst belongs. In this case, the terminal device determines, based on the index value information of the reference signal burst, a start location of a 1^{st} reference signal burst in the reference signal burst set to which the reference signal burst belongs (or understood as a start location of the reference signal burst set), and determines the start location of the frame based on a location of the frame in which the 1^{st} reference signal burst set is located.

With reference to the physical structure of the reference signal burst shown in FIG. 5, a time domain resource and a frequency domain resource that correspond to the burst are obtained by using RRC signaling. The terminal device parses the received reference signal burst to obtain CSI-RS information, performs symbol synchronization based on an autocorrelation feature of the m-sequence, and determines a location of a CSI-RS symbol; the terminal device determines a location of a PDCCH based on the determined CSI-RS symbol and the physical structure of the reference signal burst; and further, the terminal device detects the PDCCH, to obtain downlink control information (downlink control information, DCI) signaling carried on the PDCCH. The terminal device parses the DCI signaling, obtains frame indication information and index value information of the reference signal burst from the DCI signaling, and determines, based on the frame indication information and the index value information, a start location of a frame in which the current reference signal burst is located. A radio network temporary identifier (radio network temporary identifier, RNTI) scrambling method of the DCI signaling includes but is not limited to C-RNTI scrambling, CS-RNTI scrambling, a scrambling method other than the C-RNTI scrambling and the CS-RNTI scrambling, and the like.

In conclusion, according to the method shown in FIG. 6, the first information may affect the periodicity of the reference signal burst set by indicating the interval between the two adjacent reference signal bursts, to improve flexibility of obtaining the periodicity of the reference signal burst set by the terminal device. In comparison with a manner of performing automatic gain control settling, cell search, or layer 1 reference signal received power measurement based on a fixed periodicity of receiving an SSB, a manner of performing automatic gain control settling, cell search, or layer 1 reference signal received power measurement based on the flexible periodicity of receiving the reference signal burst helps reduce a delay of activating the secondary cell by the terminal device.

It can be understood that, to implement the functions in the foregoing embodiment, the terminal device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by a transceiver unit of computer software depends on particular application scenarios and design constraint conditions of the technical solutions.

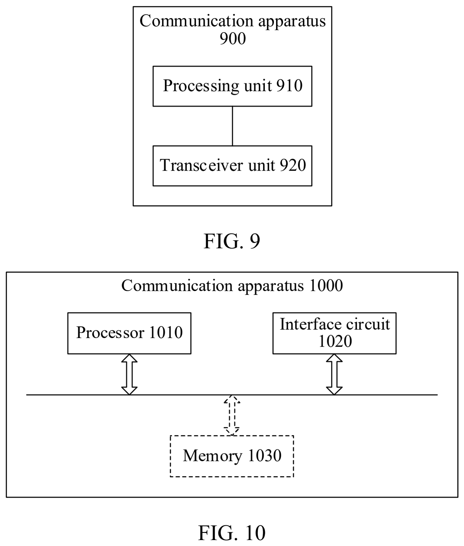

FIG. 9 and FIG. 10 are diagrams of structures of possible communication apparatuses according to embodiments of this application. These communication apparatuses may be configured to implement functions of the terminal device in the foregoing method embodiments. Therefore, beneficial effects of the foregoing method embodiments can also be implemented. In this embodiment of this application, the communication apparatus may be the terminal 120 shown in FIG. 1, or may be a module (for example, a chip) used in the terminal device, or the communication apparatus may be the network device 110 shown in FIG. 1, or may be a module (for example, a chip) used in the network device.

As shown in FIG. 9, a communication apparatus 900 includes a processing unit 910 and a transceiver unit 920. The communication apparatus 900 is configured to implement functions of the terminal device in the method embodiment shown in FIG. 6.

When the communication apparatus 900 is configured to implement the functions of the terminal device in the method embodiment shown in FIG. 6, the transceiver unit 920 is configured to receive first information from a network device, where the first information indicates a start location of a reference signal burst of a secondary cell and an interval between two adjacent reference signal bursts; the transceiver unit 920 is further configured to receive the reference signal burst from the secondary cell based on the start location and the interval; and the processing unit 910 is configured to perform automatic gain control settling, cell search, or layer 1 reference signal received power measurement based on the reference signal burst.

In a possible implementation, the reference signal burst includes a signal including a first signal and a first channel, the first signal is used for synchronization, the first channel is used for carrying frame indication information and index value information, the frame indication information indicates a location of the reference signal burst in a corresponding frame, and the index value information indicates a location of the reference signal burst in a reference signal burst set to which the reference signal burst belongs.

In a possible implementation, the first signal includes a primary synchronization signal PSS and/or a secondary synchronization signal SSS, and the first channel is a physical broadcast channel PBCH.

In a possible implementation, the first signal is a signal generated based on an m-sequence, and the first channel is a physical downlink control channel PDCCH.

In a possible implementation, the transceiver unit 920 is further configured to receive second information from the network device, where the second information indicates a quantity of reference signal bursts included in the reference signal burst set.

In a possible implementation, the transceiver unit 920 is further configured to receive third information from the network device, where the third information indicates a quantity of reference signal burst sets.

In a possible implementation, the quantity of reference signal bursts in the reference signal burst set is determined based on a quantity of receive beams of the terminal device.

In a possible implementation, the transceiver unit 920 is further configured to receive fourth information from the network device, where the fourth information indicates a sending manner of reference signal bursts in a same reference signal burst set, and the sending manner is repeated sending or non-repeated sending.

For more detailed descriptions of the transceiver unit 920 and the processing unit 910, refer to related descriptions of the terminal device in the method embodiment shown in FIG. 6.

As shown in FIG. 9, a communication apparatus 900 includes a processing unit 910 and a transceiver unit 920. The communication apparatus 900 is configured to implement functions of the network device in the method embodiment shown in FIG. 6.

When the communication apparatus 900 is configured to implement the functions of the network device in the method embodiment shown in FIG. 6, the transceiver unit 920 is configured to send first information to a terminal device, where the first information indicates a start location of a reference signal burst of a secondary cell and an interval between two adjacent reference signal bursts; and the transceiver unit 920 is further configured to send the reference signal burst to the terminal device based on the start location and the interval via the secondary cell, where the reference signal burst is used for performing automatic gain control settling, cell search, or layer 1 reference signal received power measurement.

In a possible implementation, the reference signal burst includes a signal including a first signal and a first channel, the first signal is used for synchronization, the first channel is used for carrying frame indication information and index value information, the frame indication information indicates a location of the reference signal burst in a corresponding frame, and the index value information indicates a location of the reference signal burst in a reference signal burst set to which the reference signal burst belongs.

In a possible implementation, the first signal includes a primary synchronization signal PSS and/or a secondary synchronization signal SSS, and the first channel is a physical broadcast channel PBCH.

In a possible implementation, the first signal is a signal generated based on an m-sequence, and the first channel is a physical downlink control channel PDCCH.

In a possible implementation, the transceiver unit 920 is further configured to send second information to the terminal device, where the second information indicates a quantity of reference signal bursts included in the reference signal burst set.

In a possible implementation, the transceiver unit 920 is further configured to send the second information to the terminal device, where the second information indicates a quantity of reference signal burst sets.

In a possible implementation, the quantity of reference signal bursts in the reference signal burst set is determined based on a quantity of receive beams of the terminal device.

In a possible implementation, the transceiver unit 920 is further configured to send fourth information to the terminal device, where the fourth information indicates a sending manner of reference signal bursts in a same reference signal burst set, and the sending manner is repeated sending or non-repeated sending.

For more detailed descriptions of the transceiver unit 920 and the processing unit 910, refer to related descriptions of the network device in the method embodiment shown in FIG. 6.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, store input data needed by the processor 1010 to run the instructions, or store data generated after the processor 1010 runs the instructions.

When the communication apparatus 1000 is configured to implement the method shown in FIG. 6, the processor 1010 is configured to implement a function of the processing unit 910, and the interface circuit 1020 is configured to implement a function of the transceiver unit 920.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a network device, the chip in the network device implements functions of the network device in the foregoing method embodiments. That the chip in the network device receives information from a terminal may be understood as that the information is first received by another module (for example, a radio frequency module or an antenna) in the network device, and then sent by these modules to the chip in the network device. That the chip in the network device sends information to a terminal may be understood as that the information is delivered to another module (for example, a radio frequency module or an antenna) in the network device, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A secondary cell activation method, wherein the method comprises:
receiving first information from a network device, wherein the first information indicates a start location of a reference signal burst of a secondary cell and an interval between two adjacent reference signal bursts;
receiving the reference signal burst from the secondary cell based on the start location and the interval; and
performing automatic gain control settling, cell search, or layer 1 reference signal received power measurement based on the reference signal burst.

2. The method according to claim 1, wherein the reference signal burst comprises a signal comprising a first signal and a first channel, the first signal is used for synchronization, the first channel is used for carrying frame indication information and index value information, the frame indication information indicates a location of the reference signal burst in a corresponding frame, and the index value information indicates a location of the reference signal burst in a reference signal burst set to which the reference signal burst belongs.

3. The method according to claim 2, wherein the first signal comprises a primary synchronization signal PSS and/or a secondary synchronization signal SSS, and the first channel is a physical broadcast channel PBCH.

4. The method according to claim 2, wherein the first signal is a signal generated based on an m-sequence, and the first channel is a physical downlink control channel PDCCH.

5. The method according to any one of claims 1 to 4, wherein the method further comprises:
receiving second information from the network device, wherein the second information indicates a quantity of reference signal bursts comprised in the reference signal burst set.

6. The method according to any one of claims 1 to 4, wherein the method further comprises:
receiving third information from the network device, wherein the third information indicates a quantity of reference signal burst sets.

7. The method according to claim 6, wherein the quantity of reference signal bursts in the reference signal burst set is determined based on a quantity of receive beams of a terminal device.

8. The method according to any one of claims 1 to 7, wherein the method further comprises:
receiving fourth information from the network device, wherein the fourth information indicates a sending manner of reference signal bursts in a same reference signal burst set, and the sending manner is repeated sending or non-repeated sending.

9. A secondary cell activation method, wherein the method comprises:
sending first information to a terminal device, wherein the first information indicates a start location of a reference signal burst of a secondary cell and an interval between two adjacent reference signal bursts; and
sending the reference signal burst to the terminal device based on the start location and the interval via the secondary cell, wherein the reference signal burst is used for performing automatic gain control settling, cell search, or layer 1 reference signal received power measurement.

10. The method according to claim 9, wherein the reference signal burst comprises a signal comprising a first signal and a first channel, the first signal is used for synchronization, the first channel is used for carrying frame indication information and index value information, the frame indication information indicates a location of the reference signal burst in a corresponding frame, and the index value information indicates a location of the reference signal burst in a reference signal burst set to which the reference signal burst belongs.

11. The method according to claim 10, wherein the first signal comprises a primary synchronization signal PSS and/or a secondary synchronization signal SSS, and the first channel is a physical broadcast channel PBCH.

12. The method according to claim 10, wherein the first signal is a signal generated based on an m-sequence, and the first channel is a physical downlink control channel PDCCH.

13. The method according to any one of claims 9 to 12, wherein the method further comprises:
sending second information to the terminal device, wherein the second information indicates a quantity of reference signal bursts comprised in the reference signal burst set.

14. The method according to any one of claims 9 to 12, wherein the method further comprises:
sending third information to the terminal device, wherein the third information indicates a quantity of reference signal burst sets.

15. The method according to claim 14, wherein the quantity of reference signal bursts in the reference signal burst set is determined based on a quantity of receive beams of the terminal device.

16. The method according to any one of claims 9 to 15, wherein the method further comprises:
sending fourth information to the terminal device, wherein the fourth information indicates a sending manner of reference signal bursts in a same reference signal burst set, and the sending manner is repeated sending or non-repeated sending.

17. A communication apparatus, comprising a module configured to perform the method according to any one of claims 1 to 8, or comprising a module configured to perform the method according to any one of claims 9 to 16.

18. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 8 through a logic circuit or by executing code instructions, or the processor is configured to implement the method according to any one of claims 9 to 16 through a logic circuit or by executing code instructions.

19. A computer-readable storage medium, wherein the storage medium stores a computer program or instructions, and when the computer program or the instructions are executed by a communication apparatus, the method according to any one of claims 1 to 8 is implemented, or the method according to any one of claims 9 to 16 is implemented.
